# EUROPÄISCHE PATENTANMELDUNG

(11) **EP 4 763 401 A1**
(43) Veröffentlichungstag der Anmeldung: **24.06.2026**
(21) Anmeldenummer: 24222829.4
(22) Anmeldetag: 23.12.2024
(51) Int. Cl.: B23K 26/14, B23K 26/70

(54) **DÜSENAUFNAHME FÜR EINE LASERBEARBEITUNGSDÜSE, LASERBEARBEITUNGSKOPF UND LASERBEARBEITUNGSDÜSE**

(71) Anmelder: Bystronic Laser AG, 3362 Niederönz (CH)
(72) Erfinder: Lüdi, Andreas, 3400 Burgdorf (CH); Binggeli, René, 4932 Lotzwil (CH); Schwind, Tobias, 3360 Herzogenbuchsee (CH); Lüdi, Tobias, 3414 Oberburg (CH); Tramontano, Marco, 8045 Zürich (CH)
(74) Vertreter: Fink Numrich Patentanwälte PartmbB

(57) **Zusammenfassung**

Die Erfindung betrifft eine gekühlte Düsenaufnahme (6) für eine Laserbearbeitungsdüse (1) mit einem Kühlkörper (23), der einen Kühlkanal (21) zur Aufnahme eines Kühlmittels (24) aufweist, und mit einer Düsenaufnahmeschnittstelle (20) zur Verbindung der Düsenaufnahme (6) mit einem Laserbearbeitungskopf (1). Die Erfindung ist dadurch gekennzeichnet, dass die Düsenaufnahmeschnittstelle (20) als separates, im Kühlkörper (23) angeordnetes Hülsenelement ausgebildet ist, welches aus einem Material mit einer Materialhärte oder Oberflächenhärte von zumindest 214 HB (Brinell-Härte) besteht.

## Beschreibung

Die Erfindung betrifft eine gekühlte Düsenaufnahme für eine Laserbearbeitungsdüse, einen Laserbearbeitungskopf für eine Laserbearbeitungsmaschine sowie eine Laserbearbeitungsdüse.

Bei der Laserbearbeitung von metallischen Werkstücken, wie z.B. Metallblechen, ist es bekannt, mittels eines Laserstrahls Werkstückteile mit vorbestimmten Formen und Abmessungen aus einem Werkstück auszuschneiden. Der Laserstrahl tritt dabei aus einem Laserbearbeitungskopf aus, der über das Werkstück bewegt wird. Am Laserbearbeitungskopf ist in der Regel eine Laserbearbeitungsdüse vorgesehen, durch welche der Laserstrahl der zu bearbeitenden Stelle am Werkstück zugeführt wird.

In als Laserstrahlschneidmaschinen ausgebildeten Laserbearbeitungsmaschinen wird typischerweise ein Schneidgas zum Schneiden von Teilen aus metallischen Werkstücken, z.B. Blechtafeln, Metallprofilen oder Metallrohren, genutzt. Derartige Laserstrahlschneidmaschinen weisen eine Laserleistung von wenigstens 1 kW auf. Das Schneidgas hat primär die Aufgabe, das geschmolzene Material des Werkstücks aus dem Schnittspalt auszutreiben. Weitere Aufgaben des Schneidgases sind die Kühlung des Materials und eine Schutzgaswirkung insbesondere gegen Oxidation.

Es gibt verschiedene Arten von eingesetzten Schneidgasen: Beim Sauerstoffschneiden wird Sauerstoff als reaktives Gas verwendet. Dabei werden typischerweise geringe Schnittgeschwindigkeiten und eine gute Schnittqualität, vor allem bei höheren Blechdicken erzielt. Das Sauerstoff- bzw. Brennschneiden geht mit einer Oxidation einher, was bei gewissen Materialien unerwünscht ist. Ist die Oxidation unkritisch, so steht mit dem Brennschneiden ein äußerst performanter Prozess zur Verfügung. Beim Schmelzschneiden kann reiner Stickstoff zum Austreiben der Schmelze verwendet werden. Hierbei sind, im Gegensatz zu einer Verwendung von Sauerstoff als Schneidgas, höhere Schnittgeschwindigkeiten möglich und es wird eine hinreichend gute Schnittqualität erhalten. Ferner kann als Schneidgas Druckluft anstelle von reinem Stickstoff zum Schneiden verwendet werden oder auch ein Mischgas, das sowohl Sauerstoff als auch Stickstoff und/oder andere Gase enthält.

Beim Brennschneidprozess hat es sich gemäß EP 4201576 A1 als noch vorteilhafter erwiesen, wenn die Fokuslage des Bearbeitungslasers deutlich oberhalb des Bleches zu liegen kommt. Besonders vorteilhaft ist diese Einstellung bei hoher Laserleistung, insbesondere >10kW, und bei dickeren Metallblechen >20mm. Für gewisse Schmelz- oder Mixedgas-Schneidprozesse, wie z.B. zur Erzeugung besonders breiter Schnittspalte, können ähnliche Fokuslagen ebenfalls vorteilhaft sein. Die Schneidkopfoptik wird in diesem Fall so eingestellt, dass der Fokuspunkt des Laserstrahls eine Distanz zur Materialoberkante aufweist. Dabei ist diese Distanz meistens größer als der Abstand der Laserbearbeitungsdüse zum zu bearbeitenden Werkstück, was dazu führt, dass der Fokus innerhalb der Düse, d.h. oberhalb der Düsenöffnung liegt. Vorteil davon ist primär, dass die Düsenöffnung auch als optische Blende des Laserstrahls fungiert und Laserrandstrahlung abschneidet (bzw. mindestens teilweise absorbiert), was zu einem besonders schönen Schnitt führen kann.

Allgemein entsteht durch die Laserbearbeitung von Werkstücken entlang des Laserstrahlverlaufs Wärme, die die entsprechenden Bauteile der Laserbearbeitungsmaschine, insbesondere die Laserbearbeitungsdüse, erhitzt. Bei einer Fokuslage oberhalb des zu bearbeitenden Werkstücks, wie vorhergehend beschrieben, kann die Erhitzung, insbesondere der Laserbearbeitungsdüse, stärker ausgeprägt sein als bei einer Fokuslage auf Höhe des Werkstücks oder in diesem.

Da eine Erhitzung der Bauteile einen negativen Einfluss auf die Laserbearbeitung hat, ist eine entsprechende Kühlung der betroffenen Bauteile, insbesondere der Laserbearbeitungsdüse, sinnvoll.

Aus dem Stand der Technik sind hierzu verschiedene Kühlverfahren bekannt. Die einfachste Version einer Temperaturregulierung ist das Kühlen der Laserbearbeitungsdüse durch Luftkonvektion, bei welcher die Wärme an die vorbeiströmende Umgebungsluft abgegeben wird.

Insbesondere bei höheren Schneidleistungen reicht diese Art der Kühlung jedoch nicht aus, weswegen aus dem Stand der Technik ebenfalls kühlmittelgekühlte, insbesondere kühlfluidgekühlte, Laserbearbeitungsdüsen bekannt sind.

Im Normalfall ist die eigentliche Laserbearbeitungsdüse, meistens aus einem metallischen Material wie beispielsweise Kupfer bestehend, ein Verschleißteil, welches über eine Schnittstelle lösbar mit dem Laserbearbeitungskopf verbunden wird. Neben den bekannten Steck- und Bajonettverschlussverbindungen haben sich in der Praxis Schraubverbindungen bestehend aus einem Innengewinde an der Düsenaufnahme und einem Außengewinde an der Laserbearbeitungsdüse bewährt.

Die WO 2021051734 A1 zeigt eine Anordnung zur Aufnahme einer flüssigkeitsgekühlten Laserbearbeitungsdüse mit einem mehrteiligen Aufbau, bestehend aus einem ersten und einem zweiten Isolierblock, einem Kupferring als Kühlkörper und einem Metallgehäuse. Der Kupferring fungiert hier als wärmeleitendes Element und bildet einen flüssigkeitsgefüllten Kühlkanal aus, der in Richtung Laserbearbeitungskopf durch den dort befindlichen Isolierblock abgedichtet wird.

Die WO 2024078067 A1 offenbart eine flüssigkeitsgekühlte Kühlvorrichtung für eine Laserbearbeitungsdüse, die durch ein Fixierelement separat auf die Düsenaufnahme aufgesetzt wird. Durch den beschriebenen Aufbau bedingt, ist der Kühlkörper nur in Kontakt mit der Düsenaufnahme, nicht mit der Laserbearbeitungsdüse selbst, was dazu führt, dass die potentielle Kühlleistung eingeschränkt ist.

Die vorgenannten Kühlvorrichtungen bieten Lösungen für die kühlmittelbasierte, insbesondere flüssigkeitsbasierte Kühlung einer Laserbearbeitungsdüse bzw. einer Düsenaufnahme für eine Laserbearbeitungsdüse. Sie weisen dabei den Nachteil auf, dass entweder der Kühlkörper der Kühlvorrichtung keinen unmittelbaren Kontakt zur Laserbearbeitungsdüse besitzt (WO 2024078067 A1) oder dass der Kühlkörper bestehend aus Kupfer durch einen komplizierten, mehrteiligen Aufbau angebracht ist (WO 2021051734 A1). Weiterhin hat die Lösung, die in der WO 2021051734 A1 offenbart ist, den Nachteil, dass die Schnittstelle zur Aufnahme der Laserbearbeitungsdüse ebenfalls durch den beschriebenen Kupferring gewährleistet wird. Dies ist nachteilig, da eine mechanische Verbindung über beispielsweise eine Innengewinde-Außengewinde-Kombination durch die niedrige Oberflächenhärte des Kupfers verschleißanfällig ist. Dies ist besonders für die Düsenaufnahme problematisch, da diese im Gegensatz zur Laserbearbeitungsdüse nicht als Verschleißteil angelegt ist.

Aufgabe der dieser Anmeldung zugrundeliegenden Erfindung ist es daher, eine verbesserte gekühlte Düsenaufnahme bereitzustellen. Weiterhin ist es eine Aufgabe der Erfindung, einen entsprechenden Laserbearbeitungskopf und eine Laserbearbeitungsdüse mit hoher Kühlleistung bereitzustellen.

Diese Aufgabe wird durch die in Patentanspruch 1 beschriebene gekühlte Düsenaufnahme für eine Laserbearbeitungsmaschine bzw. durch den in Patentanspruch 14 beschriebenen Laserbearbeitungskopf bzw. durch die in Patentanspruch 15 beanspruchte Laserbearbeitungsdüse gelöst.

Insbesondere erfüllt die erfindungsgemäße gekühlte Düsenaufnahme die Aufgabe, dass die Laserbearbeitungsdüse auch in dem Fall ausreichend gekühlt werden kann, wenn die Bearbeitungsfokuslage des Laserbearbeitungsstrahl nahe an oder innerhalb der Laserbearbeitungsdüse liegt, was die Flexibilität der möglichen Laserbearbeitungsverfahren erhöht. Beispielsweise ist es so möglich, die Blendenfunktion der Laserbearbeitungsdüse auszunutzen, die einen Teil des Laserstrahls beschneidet und somit zu einer erhöhten Schneidqualität beitragen kann. Diese Nutzung der Laserbearbeitungsdüse als Blende führt zu einem erhöhten Wärmeeintrag in die Laserbearbeitungsdüse, welcher durch die erfindungsgemäße gekühlte Düsenaufnahme effektiv abgeführt wird.

Die erfindungsgemäße gekühlte Düsenaufnahme für eine Laserbearbeitungsdüse beinhaltet einen Kühlkörper mit einem Kühlkanal zur Aufnahme eines Kühlmittels und weist eine Düsenaufnahmeschnittstelle zur Verbindung der Düsenaufnahme mit einem Laserbearbeitungskopf auf. Die Düsenaufnahme zeichnet sich dadurch aus, dass die Düsenaufnahmeschnittstelle als separates, im Kühlkörper angeordnetes Hülsenelement ausgebildet ist, welches aus einem Material mit einer Materialhärte oder Oberflächenhärte von zumindest 214 HB (Brinell-Härte) besteht. Diese Härte entspricht einer Härte nach Martens von mindestens 1500 N/mm² Im Falle einer Materialhärte von zumindest 214 HB weist das gesamte Material des Hülsenelements diese Härte auf. Im Falle einer Oberflächenhärte von zumindest 214 HB weist zumindest die Oberfläche des Hülsenelements diese Härte auf.

Der Vorteil der beschriebenen Erfindung gegenüber dem bekannten Stand der Technik ist der, dass die hier beanspruchte gekühlte Düsenaufnahme eine sehr effiziente Kühlung der Laserbearbeitungsdüse verwirklicht und zusätzlich dazu eine verschleißfeste Düsenaufnahmeschnittstelle bereitstellt. Dadurch ist es möglich, auch mit hohen Laserbearbeitungsleistungen schneiden zu können, was im Ergebnis die Prozesseffizienz erhöht. Weiterhin sind durch die beschriebene Art der Laserkühlung auch Laserschneidverfahren anwendbar, bei denen die Fokuslage des Laserbearbeitungsstrahls innerhalb der Laserbearbeitungsdüse liegt, was zu einem besonders hohen Wärmeeintrag in die Laserbearbeitungsdüse führt.

Bevorzugt besteht das verschleißfeste Hülsenelement aus einem Material der Gruppe beinhaltend Edelstahl, Manganhartstahl, Endura. Die Materialien dieser Gruppe sind verschleißfest und lassen sich dennoch gut bearbeiten.

In einer bevorzugten Variante besitzt das wärmeleitfähige Material des Kühlkörpers der gekühlten Düsenaufnahme eine Wärmeleitfähigkeit von mindestens 100 W/mK. Dies sorgt für einen effektiven Abtransport der Wärme von der Laserbearbeitungsdüse in Richtung Kühlflüssigkeit.

Insbesondere ist es vorteilhaft, wenn der Kühlkörper aus einem Material der Gruppe beinhaltend Aluminium, Aluminiumlegierung, Kupfer, Messing, Silber, Silberlegierung, Gold, Goldlegierung und/oder aus goldbeschichtetem Metall besteht. Diese Materialien sind hoch wärmeleitend und vergleichsweise resistent bei Verwendung mit einer Kühlflüssigkeit.

Eine bevorzugte Variante der Erfindung sieht vor, dass die Form des Kühlkörpers derart gestaltet ist, dass zumindest eine direkte Kontaktfläche zwischen Kühlkörper und Laserbearbeitungsdüse ausgebildet ist. Dies führt dazu, dass die Wärmeableitung von der Laserbearbeitungsdüse Richtung Kühlkörper erhöht wird, da eine direkte Wärmeleitung über die Kontaktfläche möglich ist.

Bevorzugt ist die erfindungsgemäße Düsenaufnahme derart gestaltet, dass die zumindest eine zwischen der Laserbearbeitungsdüse und dem Kühlkörper ausgebildete Kontaktfläche eine flächige Erstreckung von mindestens 400 mm² aufweist, um eine effektive Wärmeübertragung zu gewährleisten.

In einer weiteren Variante der erfindungsgemäßen gekühlten Düsenaufnahme für eine Laserbearbeitungsdüse weist die Oberfläche des Kühlkörpers, welche zu der zumindest einen Kontaktfläche zwischen dem Kühlkörper und der Laserbearbeitungsdüse gehört, als Oberflächenrauheit einen Mittenrauwert Ra von kleiner gleich 1.6 µm und/oder eine Kontaktflächenebenheit von kleiner als 10 µm auf. Dies bietet den Vorteil, dass die Effektivität der Wärmeübertragung zwischen der Laserbearbeitungsdüse und dem Kühlkörpers noch weiter gesteigert wird, da die Menge der isolierenden Lufteinschlüsse zwischen Kühlkörper und Laserbearbeitungsdüse minimiert wird.

Um die effektive Größe der Kontaktfläche noch weiter zu steigern, sieht eine weitere Variante der erfindungsgemäßen gekühlten Düsenaufnahme vor, dass in der Oberfläche des Kühlkörpers, welche zu der zumindest einen Kontaktfläche zwischen der Laserbearbeitungsdüse und dem Kühlkörper gehört, Vertiefungen und/oder Erhebungen ausgebildet sind. Diese Vertiefungen und/oder Erhebungen korrelieren mit entsprechenden Erhebungen und/oder Vertiefungen an der Kontaktfläche der Laserbearbeitungsdüse und vergrößern dadurch das Wärmeaustauschpotential zwischen Laserbearbeitungsdüse und Düsenaufnahme.

Eine weitere Ausführungsform der gekühlten Düsenaufnahme zeichnet sich dadurch aus, dass in dem mindestens einen Kühlkanal im Kühlkörper zumindest eine Kühlrippe ausgebildet ist, wobei die zumindest eine Kühlrippe vorzugsweise an der Innenseite einer der Laserbearbeitungsdüse zugewandten Wandung, bzw. zugewandten Seite des Kühlkörpers positioniert ist. Dies vergrößert die Wärmeaustauschfläche zwischen Kühlkanal und Kühlmittel und sorgt für eine verbesserte Wärmeabfuhr.

Eine weitere Ausführungsform der gekühlten Düsenaufnahme zeichnet sich dadurch aus, dass der mindestens eine Kühlkanal im Kühlkörper in Richtung des Laserbearbeitungskopfes offen ist und durch ein Gegenstück in einer Schnittstelle des Laserbearbeitungskopfes abdichtbar ist. Diese Ausführung hat den Vorteil, dass der Kühlkanal durch einfache Fertigungsmethoden hergestellt werden kann, ohne dass eine innenliegende Bohrung o. Ä. ausgeführt werden muss. Weiterhin ist durch diese Art der Gestaltung der Kühlkanal später für Wartungs- oder Reparaturzwecke weiterhin zugänglich.

Eine bevorzugte Ausführungsform sieht vor, dass zur Abdichtung des mindestens einen Kühlkanals im Kühlkörper gegenüber der Schnittstelle des Laserbearbeitungskopfes eine ebene Fläche und ein an diese anliegendes elastisches Dichtungselement vorgesehen ist. Diese Gestaltung trägt zu einer effizienten Abdichtung bei und verhindert ungewollt austretende Kühlflüssigkeit.

Eine weitere Ausführungsform der Erfindung sieht vor, dass der untere Teil des Laserbearbeitungskopfes, insbesondere die Laserbearbeitungsdüse, elektrisch vom restlichen Laserbearbeitungskopf isoliert wird. Das zusätzlich eingebrachte Isolationselement, welches vorzugsweise aus PEEK-Kunststoff gefertigt ist, kann mit dem Kühlkörper kombiniert werden. Diese Variante der Erfindung hat den Vorteil, dass eine Abstandsmessung zwischen Laserbearbeitungsdüse und Werkstück über die Messung der elektrischen Kapazität funktioniert. Vorteilhaft an der Verwendung von PEEK ist, dass das Material elektrisch thermisch isolierend wirkt und die Wärme nicht an die darüber liegenden Bauteile und Elektronik weitergibt.

Besonders bevorzugt ist das Isolationselement aus PEEK-Kunststoff so eingebracht, dass es auch den Kühlkanal aus Richtung des Laserbearbeitungskopfes abdichtet, was dazu führt, dass eine platzsparende Bauweise möglich ist. Anstelle von PEEK können andere geeignete Kunststoffe mit ähnlichen Materialeigenschaften wie PEEK verwendet werden.

Für eine effektive Wärmeableitung wird in einer bevorzugten Variante als Kühlmittel für die Kühlung der Düsenaufnahme bzw. der Laserbearbeitungsdüse ein Kühlfluid mit einer spezifischen Wärmekapazität von mindestens 1 kJ/kgK, vorzugsweise eine Kühlflüssigkeit mit einer spezifischen Wärmekapazität von mindestens 1 kJ/kgK, eingesetzt.

Besonders bevorzugt wird für die gekühlte Düsenaufnahme als Kühlflüssigkeit Wasser und insbesondere deionisiertes Wasser eingesetzt, was eine gute Verfügbarkeit hat und mit den anderen eingesetzten Materialien im Kontakt keine ungewünschten Reaktionen erzeugt.

Weiterhin wird ein Laserbearbeitungskopf für eine Laserbearbeitungsmaschine mit einer Schnittstelle zur Verbindung einer Düsenaufnahme mit dem Laserbearbeitungskopf beansprucht, der dazu ausgebildet ist, die erfindungsgemäße gekühlte Düsenaufnahme aufzunehmen. Dadurch ist der Laserbearbeitungskopf in der Lage, Laserbearbeitungsprozesse mit einer hohen Leistung und auch Verfahren mit Fokuslage in der Laserbearbeitungsdüse auszuführen.

In einer bevorzugten Variante des erfindungsgemäßen Laserbearbeitungskopfes beinhaltet der Laserbearbeitungskopf an der Schnittstelle zur Düsenaufnahme eine Abdichtungsfläche, die den in der Düsenaufnahme ausgebildeten Kühlkanal in Richtung Laserbearbeitungskopf abdichtet. Dies führt zu einer effektiven Abdichtung des mit Kühlmittel gefüllten Kühlkanals, ohne dass ein weiteres separates Abdichtungsbauteil eingesetzt werden muss.

Weiterhin wird eine Laserbearbeitungsdüse für eine Düsenaufnahme bereitgestellt, die in die erfindungsgemäße Düsenaufnahme über die Düsenaufnahmeschnittstelle eingesetzt werden kann. Die Laserbearbeitungsdüse weist dabei in einer Oberfläche, welche zu der zumindest einen Kontaktfläche zwischen der Laserbearbeitungsdüse und dem Kühlkörper gehört, Vertiefungen und/oder Erhebungen, vorzugsweise mit Nuten alternierende Rippen, auf. Diese Gestaltung führt zu einer Vergrößerung der effektiven Kontaktfläche zwischen Laserbearbeitungsdüse und dem Kühlkörper der Düsenaufnahme, was eine verbesserte Wärmeübertragung zur Folge hat.

Beispiele für mögliche Ausführungen der beanspruchten Erfindung werden in den nachfolgend beigefügten Figuren beschrieben.

Es zeigen:
Fig. 1 schematisch eine Darstellung eines Laserbearbeitungskopfes;
Fig. 2 schematisch den Aufbau einer Ausführungsform der erfindungsgemäßen Düsenaufnahme mit verbundener Laserbearbeitungsdüse;
Fig. 3 schematisch den Aufbau einer Ausführungsform der erfindungsgemäßen Düsenaufnahme mit verbundener Laserbearbeitungsdüse mit eingesetztem Isolationsblock (PEEK);
Fig. 4a und Fig 4b schematisch den Aufbau des Kühlkanals in verschiedenen Ausführungsbeispielen; und
Fig 4c schematisch eine Darstellung einer erfindungsgemäßen Ausgestaltung von Erhebungen/Vertiefungen an der Kontaktfläche.

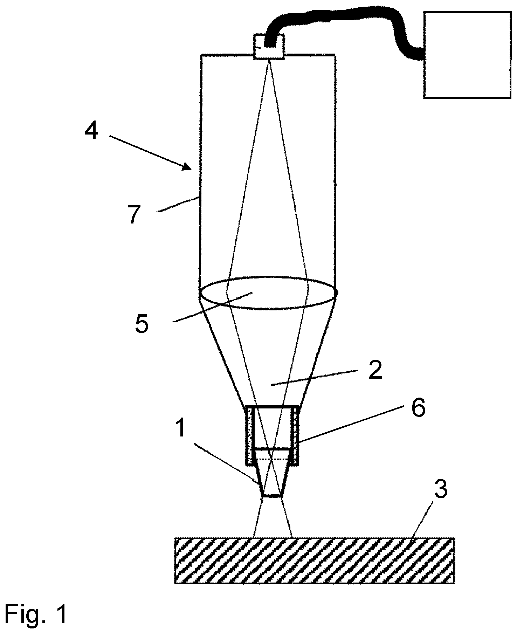

Figur 1 zeigt den schematischen Aufbau eines Laserbearbeitungskopfes 4 für eine Laserbearbeitungsmaschine bei der Bearbeitung eines Werkstückes 3 durch das Einwirken eines Laserbearbeitungsstrahls 2. Der Laserbearbeitungskopf 4 enthält die Komponenten Gehäuse 7, Fokussieroptik 5, Düsenaufnahme 6 und Laserbearbeitungsdüse 1. Es ist ersichtlich, dass der Strahlenverlauf des Laserbearbeitungsstrahls 2 durch die Fokussieroptik 5 fokussiert wird. In Figur 1 wird eine Laserbearbeitungsmethode gezeigt, bei welcher der Fokusbereich des Laserbearbeitungsstrahls 2 innerhalb der Laserbearbeitungsdüse 1 liegt, was zu einem hohen Wärmeeintrag in das Material der Laserbearbeitungsdüse 1 führt, welcher möglichst durch ein Kühlsystem abtransportiert werden muss. Hier ist ein Anwendungsfall der erfindungsgemäßen gekühlten Laserbearbeitungsdüse 1 gezeigt.

Die Fokussieroptik 5 des Laserbearbeitungskopfes 4 wird in diesem Fall so eingestellt, dass der Fokuspunkt des Laserbearbeitungsstrahls 2 eine Distanz zur Materialoberkante aufweist. Dabei ist diese Distanz vorzugsweise größer als der Abstand der Laserbearbeitungsdüse 1 zu dem zu bearbeitenden Werkstück, was dazu führt, dass der Fokus innerhalb der Laserbearbeitungsdüse 1, d.h. oberhalb der Düsenöffnung, liegt. Vorteil davon ist primär, dass die Düsenöffnung dadurch auch als optische Blende des Laserbearbeitungsstrahls 1 fungiert und Laserrandstrahlung abschneidet (bzw. mindestens teilweise absorbiert), was zu einem besonders schönen Schnitt führen kann.

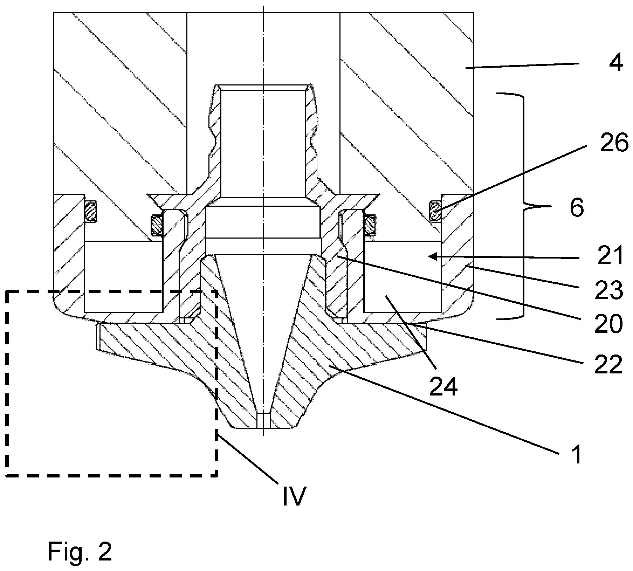

Figur 2 zeigt den schematischen Aufbau einer Ausführungsform der erfindungsgemäßen Düsenaufnahme 6 mit einer Düsenaufnahmeschnittstelle 20 und einem Kühlkörper 23, wobei die Düsenaufnahmeschnittstelle 20 als separates, im Kühlkörper 23 angeordnetes Hülsenelement ausgebildet ist. Weiterhin ist in Figur 2 eine Laserbearbeitungsdüse 1 dargestellt, die über die Düsenaufnahmeschnittstelle 20 mit der Düsenaufnahme 6 verbunden ist und so gestaltet ist, dass sich eine direkte Kontaktfläche 22 zwischen Laserbearbeitungsdüse 1 und Düsenaufnahme 6 ausbildet.

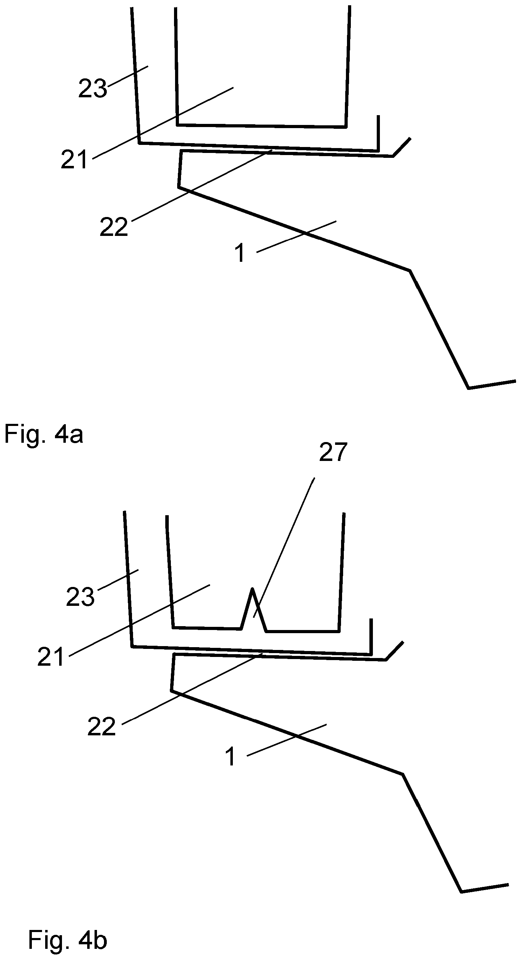

Figur 2 zeigt weiterhin, dass im Kühlkörper 23 ein Kühlkanal 21 ausgebildet ist, der zur Aufnahme eines Kühlmittels 24 dient. Dieser Kühlkanal 21 ist in Richtung Laserbearbeitungskopf 4 offen und wird durch ein entsprechend geformtes Gegenstück im Laserbearbeitungskopf 4 abgedichtet. Gezeigt ist ebenfalls ein elastisches Dichtungselement 26, was den Kühlkanal 21 entsprechend zusätzlich abdichtet. Die Düsenaufnahmeschnittstelle 20 weist in Figur 2 ein Innengewinde im Hülsenelement auf, wobei das Innengewinde in ein entsprechendes Außengewindegegenstück in der Laserbearbeitungsdüse 1 eingreift, um die Laserbearbeitungsdüse 1 mit der Düsenaufnahme 6 lösbar zu verbinden. In Figur 2 ist durch ein gestricheltes Rechteck ferner ein Ausschnitt IV angedeutet, der den weiter unten beschriebenen Figuren 4a bis 4c entspricht.

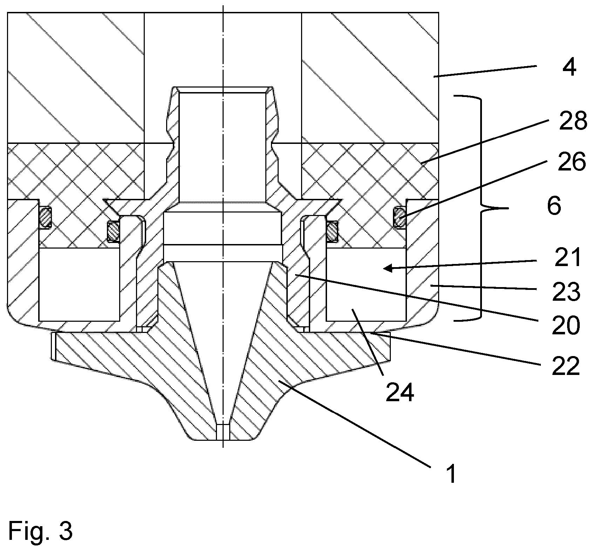

Figur 3 zeigt den schematischen Aufbau einer weiteren Ausführungsform der erfindungsgemäßen Düsenaufnahme 6 mit einer Düsenaufnahmeschnittstelle 20 und einem Kühlkörper 23, wobei die Düsenaufnahmeschnittstelle 20 als separates, im Kühlkörper 23 angeordnetes Hülsenelement ausgebildet ist. Weiterhin ist in Figur 2 eine Laserbearbeitungsdüse 1 dargestellt, die über die Düsenaufnahmeschnittstelle 20 mit der Düsenaufnahme 6 verbunden ist und so gestaltet ist, dass sich eine direkte Kontaktfläche 22 zwischen Laserbearbeitungsdüse 1 und Düsenaufnahme 6 ausbildet.

Figur 3 zeigt weiterhin, dass im Kühlkörper 23 ein Kühlkanal 21 ausgebildet ist, der zur Aufnahme eines Kühlmittels 24 dient. Dieser Kühlkanal 21 ist in Richtung Laserbearbeitungskopf 4 offen und wird durch ein entsprechend geformtes Gegenstück in der Form eines mit dem Laserbearbeitungskopf 4 verbundenen Isolationselementes 28 abgedichtet. Dieses Isolationselement ist aus einem thermisch und elektrisch isolierendem Material, insbesondere PEEK-Kunststoff, gefertigt und sorgt für eine thermische und elektrische Isolation der Laserbearbeitungsdüse gegenüber den weiteren Bauteilen des Laserbearbeitungskopfes, um beispielsweise eine kapazitive Abstandsmessung zwischen Laserbearbeitungsdüse und Werkstück durchführen zu können. Gezeigt ist ebenfalls ein elastisches Dichtungselement 26, was den Kühlkanal 21 entsprechend zusätzlich abdichtet. Die Düsenaufnahmeschnittstelle 20 weist in Figur 3 ein Innengewinde im Hülsenelement auf, das in ein entsprechendes Außengewindegegenstück in der Laserbearbeitungsdüse 1 eingreift, um die Laserbearbeitungsdüse 1 mit der Düsenaufnahme 6 lösbar zu verbinden.

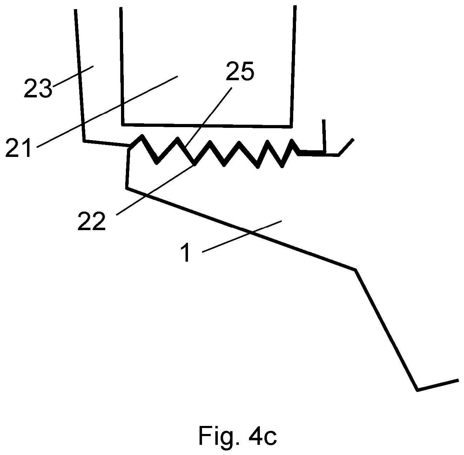

Figur 4 zeigt mehrere Varianten der Ausführung der für die Kühlung der Laserbearbeitungsdüse 1 entscheidenden Oberflächen von Düsenaufnahme 6 und Laserbearbeitungsdüse 1, die die Kontaktfläche 22 zwischen dem an der Düsenaufnahme 6 befindlichen Kühlkörper 23 und der Laserbearbeitungsdüse 1 ausbilden. Ebenfalls wird eine mögliche Ausgestaltung der Innenseite des Kühlkanals 21 dargestellt.

Figur 4a zeigt eine ebene Gestaltung der Kontaktfläche 22, wobei es in dieser Ausführung bevorzugt darauf ankommt, dass die Oberflächenbeschaffenheit der die Kontaktfläche 22 ausbildenden Oberflächen an Kühlkörper 23 und/oder Laserbearbeitungsdüse 1 eine Oberflächenrauheit von Mittenrauwert ra kleiner als 1,6 µm aufweisen, um eine möglichst große direkte Kontaktfläche für den Wärmeübergang zu schaffen, ohne zwischen den besagten Bauteilen ungewollte Lufteinschlüsse zu haben, die eine isolierende Wirkung haben und die Effektivität der Wärmeübertragung verringern.

Figur 4b zeigt eine Ausführungsform der beanspruchten Erfindung, bei welcher der Kühlkanal 21 an der an der Laserbearbeitungsdüse 1 liegenden Innenseite zumindest eine Kühlrippe 27 aufweist. Diese zumindest eine Kühlrippe 27 erhöht die Kontaktfläche zwischen Kühlmittel 24 und Kühlkanal 21 und sorgt somit für eine verbesserten Wärmeübertragung zwischen Kühlkörper 23 und Kühlmittel 24. Die Form der zumindest einen Kühlrippe 27 kann in der Ausgestaltung variieren und ist nicht auf die dargestellte Ausführung beschränkt.

Figur 4c zeigt eine Ausführungsform der beanspruchten Erfindung, bei welcher die Oberflächen des Kühlkörpers 23 und der Laserbearbeitungsdüse 1, die die Kontaktfläche 22 zwischen den besagten Bauteilen ausbilden, Erhebungen 25 und/oder Vertiefungen 25 aufweist, die so angeordnet sind, dass sie mit entsprechenden Erhebungen 25 und/oder Vertiefungen 25 im Gegenstück korrelieren. Diese Anordnung führt dazu, dass die Größe der Wärmeaustauschfläche, die entscheidend für eine effiziente Wärmeübertragung ist, bedeutend vergrößert wird, was schlussendlich zu einer verbesserten Wärmeübertragung führt. Wichtig ist hierbei, dass die Erhebungen/Vertiefungen 25 mit dem entsprechenden Gegenstück korrelieren, da sich andernfalls wieder Lufteinschlüsse im Bereich der Kontaktfläche ausbilden, die wiederum einen negativen Einfluss auf die Wärmeübertragung haben und dementsprechend zu minimieren sind.

### Bezugszeichenliste

- 1: Laserbearbeitungsdüse
- 2: Laserbearbeitungsstrahl
- 3: Werkstück
- 4: Laserbearbeitungskopf
- 5: Fokussieroptik
- 6: Düsenaufnahme
- 7: Gehäuse des Laserbearbeitungskopfes
- 20: Düsenaufnahmeschnittstelle
- 21: Kühlkanal
- 22: Kontaktfläche zwischen Laserbearbeitungsdüse und Kühlkörper
- 23: Kühlkörper
- 24: Kühlmittel
- 25: Vertiefungen/Erhebungen
- 26: elastisches Dichtungselement
- 27: Kühlrippe
- 28: Isolationselement

## Patentansprüche

1. Gekühlte Düsenaufnahme (6) für eine Laserbearbeitungsdüse (1) mit einem Kühlkörper (23), der einen Kühlkanal (21) zur Aufnahme eines Kühlmittels (24) aufweist, und mit einer Düsenaufnahmeschnittstelle (20) zur Verbindung der Düsenaufnahme (6) mit einem Laserbearbeitungskopf (1),
**dadurch gekennzeichnet, dass**
die Düsenaufnahmeschnittstelle (20) als separates, im Kühlkörper (23) angeordnetes, Hülsenelement ausgebildet ist, welches aus einem Material mit einer Materialhärte oder Oberflächenhärte von zumindest 214 HB (Brinell-Härte) besteht.

2. Gekühlte Düsenaufnahme (6) für eine Laserbearbeitungsdüse (1) nach Anspruch 1, **dadurch gekennzeichnet, dass** das Hülsenelement aus einem Material der Gruppe beinhaltend Edelstahl, Manganhartstahl, Endura besteht.

3. Gekühlte Düsenaufnahme (6) für eine Laserbearbeitungsdüse (1) nach Anspruch 1, **dadurch gekennzeichnet, dass** das Material des Kühlkörpers (23) eine Wärmeleitfähigkeit von mindestens 100 W/mK hat.

4. Gekühlte Düsenaufnahme (6) für eine Laserbearbeitungsdüse (1) nach Anspruch 1 oder 2 oder 3, **dadurch gekennzeichnet, dass** der Kühlkörper (23) aus einem Material der Gruppe beinhaltend Aluminium, Aluminiumlegierung, Kupfer, Messing, Silber, Silberlegierung, Gold, Goldlegierung und/oder aus goldbeschichtetem Metall besteht.

5. Gekühlte Düsenaufnahme (6) für eine Laserbearbeitungsdüse (1) nach einem der vorherigen Ansprüche, **dadurch gekennzeichnet, dass** zumindest eine direkte Kontaktfläche (22) zwischen Kühlkörper (23) und Laserbearbeitungsdüse (1) ausgebildet ist.

6. Gekühlte Düsenaufnahme (6) für eine Laserbearbeitungsdüse (1) nach Anspruch 5, **dadurch gekennzeichnet, dass** die zumindest eine zwischen der Laserbearbeitungsdüse (1) und dem Kühlkörper (23) ausgebildete Kontaktfläche (22) eine flächige Erstreckung von mindestens 400 mm² aufweist.

7. Gekühlte Düsenaufnahme (6) für eine Laserbearbeitungsdüse (1) nach einem der Ansprüche 5 bis 6, **dadurch gekennzeichnet, dass** die Oberfläche des Kühlkörpers (23), welche zu der zumindest einen Kontaktfläche (22) zwischen der Laserbearbeitungsdüse (1) und dem Kühlkörper (23) gehört, als Oberflächenrauheit einen Mittenrauwert Ra von kleiner gleich 1.6 µm und/oder eine Kontaktflächenebenheit von kleiner als 10 µm aufweist.

8. Gekühlte Düsenaufnahme (6) für eine Laserbearbeitungsdüse (1) nach einem der Ansprüche 5 bis 7, **dadurch gekennzeichnet, dass** in der Oberfläche des Kühlkörpers (23), welche zu der zumindest einen Kontaktfläche (22) zwischen der Laserbearbeitungsdüse (1) und dem Kühlkörper (23) gehört, Vertiefungen und/oder Erhebungen (25) ausgebildet sind.

9. Gekühlte Düsenaufnahme (6) für eine Laserbearbeitungsdüse (1) nach einem der vorherigen Ansprüche, **dadurch gekennzeichnet, dass** der mindestens eine Kühlkanal (21) im Kühlkörper (23) zumindest eine Kühlrippe (27) aufweist, wobei die zumindest eine Kühlrippe (27) vorzugsweise an der Innenseite einer der Laserbearbeitungsdüse (1) zugewandten Wandung des Kühlkörpers (23) liegt.

10. Gekühlte Düsenaufnahme (6) für eine Laserbearbeitungsdüse (1) nach einem der vorherigen Ansprüche, **dadurch gekennzeichnet, dass** der mindestens eine Kühlkanal (21) im Kühlkörper (23) in Richtung des Laserbearbeitungskopfes (4) offen ist und durch ein Gegenstück in einer Schnittstelle des Laserbearbeitungskopfes (4) abdichtbar ist.

11. Gekühlte Düsenaufnahme (6) für eine Laserbearbeitungsdüse (1) nach Anspruch 10, **dadurch gekennzeichnet, dass** zur Abdichtung des mindestens einen Kühlkanals (21) im Kühlkörper (23) gegenüber der Schnittstelle des Laserbearbeitungskopfes (4) eine ebene Fläche und ein an diese anliegendes elastisches Dichtungselement (25) vorgesehen ist.

12. Gekühlte Düsenaufnahme (6) für eine Laserbearbeitungsdüse (1) nach einem der vorherigen Ansprüche, **dadurch gekennzeichnet, dass** das Kühlmittel (24) zum Kühlen der Laserbearbeitungsdüse (1) ein Kühlfluid mit einer spezifischen Wärmekapazität von mindestens 1 kJ/kgK, vorzugsweise eine Kühlflüssigkeit mit einer spezifischen Wärmekapazität von mindestens 1 kJ/kgK, ist.

13. Gekühlte Düsenaufnahme (6) für eine Laserbearbeitungsdüse (1) nach Anspruch 12, **dadurch gekennzeichnet, dass** die Kühlflüssigkeit Wasser, vorzugsweise deionisiertes Wasser, ist.

14. Laserbearbeitungskopf (4) für eine Laserbearbeitungsmaschine mit einer Schnittstelle zur Verbindung einer Düsenaufnahme (6) mit dem Laserbearbeitungskopf (4), **dadurch gekennzeichnet, dass** die Düsenaufnahme (6) eine gekühlte Düsenaufnahme (6) nach einem der vorhergehenden Ansprüche ist.

15. Laserbearbeitungsdüse (1) für eine Düsenaufnahme (6) nach Anspruch 8 oder nach einem der Ansprüche 9 bis 13 in Kombination mit Anspruch 8, **dadurch gekennzeichnet, dass** in einer Oberfläche der Laserbearbeitungsdüse (1), welche zu der zumindest einen Kontaktfläche (22) zwischen der Laserbearbeitungsdüse (1) und dem Kühlkörper (23) gehört, Vertiefungen (25) und/oder Erhebungen (25), vorzugsweise mit Nuten alternierende Rippen, ausgebildet sind.
